# EUROPEAN PATENT APPLICATION

(11) **EP 2 314 963 A1**
(43) Date of publication of application: **27.04.2011**
(21) Application number: 09797711.0
(22) Date of filing: 15.07.2009
(51) Int. Cl.: F25D 23/08, C08J 9/12, F16L 59/02, F16L 59/06, F25D 23/06

(54) **HEAT INSULATOR, HEAT-INSULATING BOX OBJECT, HEAT-INSULATING DOOR, AND REFRIGERATOR**

(30) Priority: 17.07.2008 JP 2008185569; 16.09.2008 JP 2008236099; 15.10.2008 JP 2008266007; 16.10.2008 JP 2008267017; 25.03.2009 JP 2009073334
(71) Applicant: Panasonic Corporation, Kadoma-shi Osaka 571-8501 (JP)
(72) Inventor: SHIBAYAMA, Takuto, 2-1-61 Shiromi, Chuo-ku, Osaka-shi Osaka 540-6207 (JP); OZAKI, Hitoshi, 2-1-61 Shiromi, Chuo-ku, Osaka-shi Osaka 540-6207 (JP)
(74) Representative: Eisenführ, Speiser & Partner
(86) International application number: PCT/JP2009/003338
(87) International publication number: WO 2010/007783

(57) **Abstract**

An object of the invention is to provide a thermal insulation material that can easily make the low density, high fluidity, high strength and thermal insulation property of a foamed polyurethane resin be compatible and can suppress the increase of manufacturing cost by the easy management, obtaining, or manufacture of raw materials.

The thermal insulation material includes a foamed polyurethane resin 104 that is filled and foamed in a space between the outer and inner members 102 and 103. The foamed polyurethane resin 104 is formed by injecting the mixture of at least a polyol component, a polyisocyanate component, a supercritical, subcritical, or first liquid foaming agent of which the boiling point is equal to or lower than 0°C under atmospheric pressure, and a second liquid foaming agent that has thermal conductivity lower than the thermal conductivity of the first foaming agent and is liquid hydrocarbon at normal temperature, to the space and foaming and hardening the mixture.

## Description

### Technical Field

The present invention relates to a thermal insulation material that includes a foamed polyurethane resin filled and foamed therein, a thermal insulation box including the thermal insulation material, a thermal insulation door including the thermal insulation material, and a freezing refrigerator that includes the thermal insulation box and the thermal insulation door.

### Background Art

In recent years, the social demand for development of a technology which uses thermal energy efficiently has increased in terms of protection of the global environment. From this background, the focus has been on the development of high-performance thermal insulation technology in addition to the energy-saving design of various components or the entire device of a freezing refrigerator. In general, a foamed polyurethane resin is used as a freezing refrigerator in a freezing refrigerator.

The foamed polyurethane resin is formed by adding a foaming agent to polyol and polyisocyanate, which are raw materials, so as to foam and mold the polyol and polyisocyanate. CFC or HCFC has been used as the foaming agent in the past, but problems, such as the destruction of the ozone layer or global warming, have been raised. Accordingly, a foamed polyurethane resin using CFC-free cyclopentane has been a mainstay in recent years. However, the foamed polyurethane resin, which uses cyclopentane as a foaming agent, is inferior to the foamed polyurethane resin, which uses CFC or HCFC, at high density in terms of fluidity. For this reason, there has been a problem in that it is difficult to secure the strength of the foamed polyurethane resin, which uses cyclopentane as a foaming agent, unless a large amount of urethane is filled.

Accordingly, the above-mentioned problem has been solved through the selection of raw materials (for example, see Patent Document 1).

### Document in the Related Art

### Patent Document

Patent Document 1: JP-A-11-248344

### Disclosure of the Invention

### Problem that the Invention is to solve

Thus, the related art disclosed in Patent Document 1 achieves the low density, high fluidity, high strength and thermal insulation property of the foamed polyurethane resin through the careful selection of raw materials. However, there has been a problem in that it is difficult to manage, obtain, or manufacture the raw materials and the manufacturing cost is high.

The invention has been made to solve the above-mentioned problem in the related art, and an object of the invention is to provide a thermal insulation material that can easily make the low density, high fluidity, high strength and thermal insulation property of a foamed polyurethane resin compatible and can suppress the increase in manufacturing cost by the easy management, obtaining, or manufacture of the raw materials.

### Means for solving the Problem

In order to achieve the above-mentioned object, a thermal insulation material according to the invention includes a foamed polyurethane resin that is filled and foamed in a space between outer and inner members. The foamed polyurethane resin is formed by injecting the mixture of at least a polyol component, a polyisocyanate component, a supercritical, subcritical, or first liquid foaming agent of which the boiling point is equal to or lower than 0°C under atmospheric pressure, and a second liquid foaming agent that has thermal conductivity lower than the thermal conductivity of the first foaming agent and is liquid hydrocarbon at normal temperature, to the space, and foaming and hardening the mixture.

Only the foaming agent in the related art or the second foaming agent is evaporated by the heat that is generated by an exothermic reaction between the polyol and the polyisocyanate component or the heat that is applied from the outside, as an evaporation heat source, becomes gas, and is expanded. Therefore, time is taken from when the raw materials of the foamed polyurethane resin are injected into the space between the outer and inner members until the foaming begins to be performed, and the foamed polyurethane resin is hardened until reaching the corners of the space to be filled, so that unfilled portions may be generated. However, if the supercritical, subcritical, or first liquid foaming agent of which the boiling point is equal to or lower than 0°C under atmospheric pressure is added, the first foaming agent is evaporated by the evaporation heat source obtained from the mixture or the surroundings immediately after being mixed with the raw materials of the foamed polyurethane resin, so that the first foaming agent becomes gas and is expanded. Accordingly, the foaming begins to be performed from a low-viscosity state immediately after the raw materials of the foamed polyurethane resin are injected into the space between the outer and inner members, so that the raw materials of the foamed polyurethane resin are uniformly spread by bubbles having low viscosity. Therefore, it may be possible to complete the filling more quickly at a low viscosity state than in the related art, to suppress the generation of unfilled portions, and to reduce the amount of the filling raw materials. In addition, since the second foaming agent of which the thermal conductivity is lower than the thermal conductivity of the first foaming agent in a gas state is used together with the first foaming agent, the thermal conductivity of the molded foamed polyurethane resin isreduced, so that it may be possible to improve the thermal insulation performance of the thermal insulation material. Accordingly, if the supercritical, subcritical state, or first liquid foaming agent of which the boiling point is equal to or lower than 0°C under atmospheric pressure and the second liquid foaming agent that has a thermal conductivity lower than the thermal conductivity of the first foaming agent and is liquid hydrocarbon at normal temperature are used as a foaming agent that is to be added to the polyol and the polyisocyanate, the low density, high fluidity, high strength, and thermal insulation property of the foamed polyurethane resin are easily compatible. Further, since the raw materials are easily managed, obtained, or manufactured, it may be possible to suppress the increase of manufacturing cost.

In the above-mentioned constitution, the inner member may include recesses or protrusions.

According to this constitution, the foamed polyurethane resin, which is filled and foamed in the space between the outer and inner members, is formed by injecting the mixture of at least a polyol component, a polyisocyanate component, a supercritical, subcritical, or first liquid foaming agent of which the boiling point is equal to or lower than 0°C under atmospheric pressure, and a second liquid foaming agent that has a thermal conductivity lower than the thermal conductivity of the first foaming agent and is liquid hydrocarbon at normal temperature, and foaming and hardening the mixture. Accordingly, the fluidity of the raw materials of the foamed polyurethane resin injected into the space is high, so that it may also be possible to fill the spaces, which are between the outer member and the recesses or protrusions of the inner member, with the foamed polyurethane resin. Therefore, it may be possible to suppress the generation of the unfilled portions that are not filled with the foamed polyurethane resin. As a result, it may be possible to reduce appearance defects.

In the above-mentioned constitution, the recesses or protrusions of the inner member may be provided at at least a part of the outer circumferential portion of the inner member.

In general, the final filled portion, which is finally filled with the foamed polyurethane resin, is the outer circumferential portion of the inner member, and is filled with the foamed polyurethane resin when the most foamed polyurethane resin is hardened. Accordingly, the fluidity of the foamed polyurethane resin is lowest. For this reason, if the recesses or protrusions where flow resistance is increased are formed at the outer circumferential portion of the inner member, it is very difficult to perform the filling. However, according to this constitution, the foamed polyurethane resin, which is filled and foamed in the space between the outer and inner members, is formed by injecting the mixture of at least a polyol component, a polyisocyanate component, a supercritical, subcritical, or first liquid foaming agent of which the boiling point is equal to or lower than 0°C under atmospheric pressure, and a second liquid foaming agent that has a thermal conductivity lower than the thermal conductivity of the first foaming agent and is liquid hydrocarbon at normal temperature, to the space and foaming and hardening the mixture. Accordingly, the fluidity of the foamed polyurethane resin is high, so that it may also be possible to fill the spaces, which are between the outer member and the recesses or protrusions formed at the outer circumferential portion of the inner member, with the foamed polyurethane resin. Therefore, it may be possible to suppress the generation of the unfilled portions that are not filled with the foamed polyurethane resin. As a result, it may be possible to reduce appearance defects.

In the above-mentioned constitution, the first foaming agent may be carbon dioxide.

According to this constitution, the carbon dioxide is a material that has a boiling point of 79°C below the freezing point at substantially atmospheric pressure, has a very high foaming force, is chemically stable, and is also excellent in environmental resistance. If the carbon dioxide is used as a foaming agent, a foaming force is large, so that it may be possible to improve a filling property. Accordingly, it may be possible to suppress the generation of the unfilled portions that are not filled with the foamed polyurethane resin. Therefore, it may be possible to provide the thermal insulation material that has a high appearance quality. Further, the critical point of the carbon dioxide corresponds to 304.1 K and 7.38 MPa, and is lower relatively than the critical point of a material generally used as a supercritical fluid. Accordingly, facilities for manufacturing the supercritical carbon dioxide may be relatively simple. Meanwhile, polyisocyanate and water dissolved in the polyol react with each other while generating heat, so that carbon dioxide is generated. The carbon dioxide, which is generated by this reaction, is not sufficient as a foaming agent.

In the above-mentioned constitution, the second foaming agent may be cyclopentane.

According to this constitution, the boiling point of cyclopentane is 49°C; cyclopentane has a thermal conductivity lower than the thermal conductivity of carbon dioxide in a gas state, a diffusion rate where cyclopentane is diffused to the outside of the bubbles is lower than a diffusion rate where carbon dioxide is diffused to the outside of the bubbles, and cyclopentane may make the rate of diffusing a material to the outside of the bubbles be low due to high bubble independence. Accordingly, cyclopentane is excellent in thermal insulation performance even over time. Further, cyclopentane has been widely employed as a foaming agent in recent years instead of a CFC foaming agent. Accordingly, the cost of materials and the cost of facilities may be reduced, so that it may be possible to manufacture the thermal insulation material without much cost.

In the above-mentioned constitution, assuming that a foaming direction is a longitudinal direction and a direction perpendicular to the foaming direction is a transverse direction, an average of a ratio of a longitudinal diameter of a cell of the foamed polyurethane resin to a transverse diameter of the cell may be in the range of 1.0 to 1.4. Closed cell content may be equal to or greater than 90% and is less than 100%.

According to this constitution, if the average of the ratio of the longitudinal diameter of the cell to the transverse diameter of the cell is in the range of 1.0 to 1.4 and the cell approaches a sphere, it may be possible to increase the compressive strength in a wall thickness direction (thickness direction) due to high bubble independence and the slow decrease of the internal pressure of the bubbles.

In the above-mentioned constitution, the average of the ratio of the longitudinal diameter of the cell to the transverse diameter of the cell may be in the range of 1.0 to 1.18.

According to this constitution, the compressive strength in the wall thickness direction (thickness direction) is considerably increased. Accordingly, if density is decreased, compressive strength is generally decreased. However, since it may be possible to maintain the compressive strength in the related art even though density is decreased, it may be possible to reduce the amount of the raw materials of the polyurethane.

The thermal insulation material may further include a vacuum thermal insulation material that is provided in the space between the outer and inner members, in addition to the foamed polyurethane resin.

According to this constitution, the thermal conductivity of the vacuum thermal insulation material is significantly lower than that of the foamed polyurethane resin. For this reason, if the vacuum thermal insulation material and foamed polyurethane resin are used together as well, it may be possible to further improve the thermal insulation performance. Further, in the case of this constitution, the foamed polyurethane resin is filled and foamed in a space except for the space of the vacuum thermal insulation material in the space between the outer and inner members, and the vacuum thermal insulation material partially narrows the space which is formed between the outer and inner members and in which the foamed polyurethane resin is to be filled. However, the mixed raw materials of the foamed polyurethane resin, which are injected into the space, are spread in the shape of bubbles having a low viscosity and have high fluidity. Accordingly, it may be possible to suppress the generation of the unfilled portions that are not filled with the foamed polyurethane resin as in the case where recesses or protrusions are formed at the inner member, and to reduce appearance defects.

In the above-mentioned constitution, the average of the transverse diameter of the cell may be in the range of 10 to 150 µm.

According to this constitution, if the transverse diameter of the cell is larger than 150 µm, the cell is excessively large, so that the number of cells is decreased. Accordingly, carbon dioxide or cyclopentane is apt to be diffused and substituted with air, so that thermal conductivity is lowered over time. In contrast, if the cell diameter is less than 10 µm, the density of polyurethane is increased and thermal conductivity is lowered. Therefore, if the average of the transverse diameter of the cell is set in the range of 10 to 150 µm, it may be possible to lower thermal conductivity.

In the above-mentioned constitution, the thickness of the foamed polyurethane resin may be in the range of 30 to 100 mm.

According to this constitution, if the thickness of the foamed polyurethane resin is less than 30 mm, it is difficult to perform the filling and foaming of the foamed polyurethane resin. Accordingly, it is difficult to make the average of the ratio of the longitudinal diameter of the cell to the transverse diameter of the cell be in the range of 1.0 to 1.4. Further, even though the thickness of the foamed polyurethane resin is larger than 100 mm, there is a problem in that the size of the cell is apt to be increased and thermal conductivity deteriorates. For this reason, it may be possible to improve the thermal insulation performance by setting the thickness of the foamed polyurethane resin in the range of 30 to 100 mm.

A thermal insulation box according to the invention is formed by forming the thermal insulation material, which has the above-mentioned constitution, in a box shape.

A thermal insulation door according to the invention includes the thermal insulation material with the above-mentioned constitution.

A freezing refrigerator according to the invention includes a box that includes an opening in one direction, a door that is provided so as to form a closed space by closing the opening of the box, and a refrigerating device that cools the closed space formed by the box and the door. The box is the thermal insulation box.

A freezing refrigerator according to the invention includes a box that includes an opening in one direction, a door that is provided so as to form a closed space by closing the opening of the box, and a refrigerating device that cools the closed space formed by the box and the door. The door is the thermal insulation door.

In the above-mentioned constitution, closed cell content may be equal to or greater than 90% and be less than 100%. Assuming that a foaming direction is a longitudinal direction and a direction perpendicular to the foaming direction is a transverse direction, an average of the ratio of a longitudinal diameter of a cell of the foamed polyurethane resin of a flange of the box to a transverse diameter of the cell thereof may be in the range of 1.25 to 1.4, and an average of the ratio of a longitudinal diameter of a cell of the foamed polyurethane resin of a portion of the box except for the flange to a transverse diameter of the cell thereof may be in the range of 1.0 to 1.25.

According to this constitution, if cyclopentane and carbon dioxide are used together as well, the miniaturization of the cell occurs and the shape of the cell elongated in a direction perpendicular to the wall thickness may be generally suppressed, so that it may be possible to increase the compressive strength in a wall thickness direction. For this reason, an average of the ratio of the longitudinal diameter of the cell to the transverse diameter of the cell may be in the range of 1.0 to 1.25 at the portions except for the flanges by adding carbon dioxide to the portions except for the flanges. Accordingly, it may be possible to increase the compressive strength in the wall thickness direction. In contrast, an average of the ratio of the longitudinal diameter of the cell to the transverse diameter of the cell may be in the range of 1.25 to 1.4 at the flanges by reducing the amount of added carbon dioxide at the flanges. Accordingly, it may be possible to increase the compressive strength in the direction perpendicular to the wall thickness direction. For this reason, since it may be possible to maintain strength as a whole even though density is decreased, it may be possible to reduce the amount of the raw materials of the polyurethane resin. Therefore, it may be possible to obtain an eco-friendly freezing refrigerator.

In the above-mentioned constitution, the average of the ratio of the longitudinal diameter of the cell of the foamed polyurethane resin of the portion of the box except for the flange to the transverse diameter of the cell thereof may be in the range of 1.0 to 1.18.

According to this constitution, the anisotropy of the cell is improved, so that it may be possible to further increase the compressive strength in the wall thickness direction. Therefore, it may be possible to maintain the strength required for the freezing refrigerator even though density is further decreased, so that it may be possible to reduce the amount of the raw materials of the foamed polyurethane resin. As a result, it may be possible to obtain an eco-friendly freezing refrigerator.

In the above-mentioned constitution, the core density of the foamed polyurethane resin of the flange of the box may be larger than that of the foamed polyurethane resin of the portion of the box except for the flange.

According to this constitution, since the average of the ratio of the longitudinal diameter of the cell of the flange to the transverse diameter of the cell of the flange is in the range of 1.25 to 1.4, the compressive strength of the flange in the wall thickness direction is lower than that of the portion except for the flange. However, since the density of the flange is higher than that of the portion except for the flange, it may be possible to secure the strength in the wall thickness direction. Therefore, if the strength is deficient even though the strength is improved by optimizing the cell diameter ratio, the deficiency may be compensated for by the difference in the density in the portions of the freezing refrigerator. Accordingly, it may be possible to reduce the amount of the raw materials of the polyurethane resin. As a result, it may be possible to obtain an eco-friendly freezing refrigerator. Further, since the density may be increased or decreased by the adjustment of the amount of added carbon dioxide, it may easily be possible to increase or decrease density.

In the above-mentioned constitution, the core density of the foamed polyurethane resin may be in the range of 20 to 37 kg/m³.

According to this constitution, if the core density is 20 kg/m³ or less, it may not be possible to secure the strength required for the freezing refrigerator even though the average of the ratio of the longitudinal diameter of the cell to the transverse diameter of the cell is decreased. Further, if the core density is 37 kg/m³ or more, the foam pressure of polyurethane is significantly increased. As a result, appearance defects, such as deformation and leakage of a polyurethane resin, are caused. For this reason, if the core density is set in the range of 20 to 37 kg/m³, it may be possible to suppress appearance defects and to secure the strength required for the freezing refrigerator. In addition, if the upper limit of the core density of the thermal insulation material is 35 kg/m³, it may be possible to reduce the weight of the freezing refrigerator by decreasing the core density of the foamed polyurethane resin.

In the above-mentioned constitution, the core density of the foamed polyurethane resin may be 35 kg/m³ or less.

In the above-mentioned constitution, the thickness of the space between the outer and inner members may be in the range of 30 to 100 mm.

According to this constitution, if the wall thickness (the thickness of the space formed by the outer and inner members) is less than 30 mm, it is difficult to perform the filling and foaming and to lessen the average of the ratio of the longitudinal diameter of the cell to the transverse diameter of the cell. Further, even if the wall thickness is larger than 100 mm, there is a problem in that the size of the cell is apt to be increased and it is difficult to lessen the average of the ratio of the longitudinal diameter of the cell to the transverse diameter of the cell. For this reason, if the wall thickness (the thickness of the space formed by the outer and inner members) is set in the range of 30 to 100 mm, it may be possible to increase the compressive strength in the wall thickness direction while decreasing the density.

### Advantage of the Invention

According to the invention, it may be possible to prevent the waste of raw materials by forming a foamed polyurethane resin at a low density and make the density uniform. Accordingly, it may be possible to improve thermal insulation performance.

### Brief Description of the Drawings

Fig. 1 is a sectional view of a thermal insulation door according to a first embodiment of the invention.
Fig. 2 is a schematic view illustrating a method of manufacturing the thermal insulation door according to the first embodiment of the invention.
Fig. 3 is a sectional view of a thermal insulation door according to a second embodiment of the invention.
Fig. 4 is a sectional view of a thermal insulation door according to a third embodiment of the invention.
Fig. 5 is a schematic view of a freezing refrigerator according to a fourth embodiment of the invention.
Fig. 6 is a sectional view of a thermal insulation door for a refrigerating compartment of the freezing refrigerator according to the fourth embodiment of the invention.
Fig. 7 is a longitudinal sectional view of a freezing refrigerator according to a fifth embodiment of the invention.
Fig. 8 is a microscope photograph showing a cross-section of a foamed polyurethane resin of the freezing refrigerator according to the fifth embodiment of the invention in a foaming direction.
Fig. 9 is a longitudinal sectional view of a freezing refrigerator according to a sixth embodiment of the invention.

### Mode for Carrying Out the Invention

Embodiments of the invention will be described below with reference to the drawings. Moreover, the invention is not limited to the embodiments.

### (First embodiment)

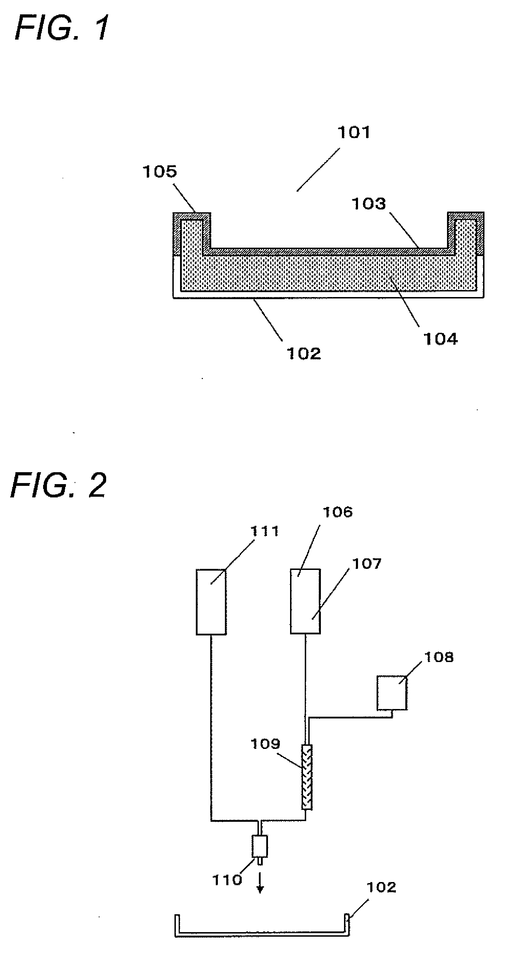

Fig. 1 is a sectional view of a thermal insulation door that is a thermal insulation material according to a first embodiment of the invention. Fig. 2 is a schematic view illustrating a method of manufacturing the thermal insulation door that is the thermal insulation material according to the first embodiment of the invention.

As shown in Figs. 1 and 2, a thermal insulation door 101 according to this embodiment includes outer and inner members 102 and 103 that form the thermal insulation door 101, and a foamed polyurethane resin 104 that is foamed and filled in a closed space between the outer and inner members 102 and 103.

Protrusions 105 are formed at the outer circumferential portion of the surface of the inner member 103 that is opposite to the surface of the inner member coming in contact with the foamed polyurethane resin 104. The protrusions 105 may be formed at a part of the outer circumferential portion of the inner member 103 and may be formed over the entire outer circumferential portion of the inner member. In general, the protrusions 105 form shelves on the inner member 103 and increase the strength of the thermal insulation door 101 (shelves). Accordingly, when the thermal insulation door 101 is used to open and close the opening of the thermal insulation box of a refrigerator, the protrusions are provided so that cold air in the refrigerator hardly leaks out of the refrigerator.

In a method of manufacturing the thermal insulation door 101, liquid carbon dioxide 108 is mixed with polyol 107, with which cyclopentane 106 has been previously mixed, by a static mixer 109. Meanwhile, if the compatibility between the cyclopentane 106 and the polyol 107 is low and the cyclopentane and the polyol are easily separated from each other, mixing means similar to the static mixer may be provided upstream of the static mixer 109 so as to mix the cyclopentane 106 with the polyol 107.

Then, polyisocyanate 111 is mixed with the polyol 107 with which the cyclopentane 106 and the liquid carbon dioxide 108 are mixed, by a mixing head 110. The mixture is injected onto the outer member 102, the inner member 103 is immediately fixed to the outer member, and the cyclopentane 106 and the carbon dioxide 108 are then foamed in a space between the outer and inner members 102 and 103. As a result, the thermal insulation door is manufactured.

Although not shown, the foam molding is performed while the surfaces of the inner and outer members 103 and 102 opposite to the foamed polyurethane resin 104 are fixed by a foaming jig so that the inner and outer members 103 and 102 are not deformed by the foam pressure of the foamed polyurethane resin 104.

Water, a foam stabilizer, a catalyst, and the like have been previously mixed with the polyol 107 in addition to the cyclopentane 106. Meanwhile, the carbon dioxide 108 may be mixed while being in a supercritical state or a subcritical state. Further, the carbon dioxide 108 may be mixed with the polyisocyanate 110.

In the thermal insulation door 101 according to this embodiment formed as described above, the foamed polyurethane resin 104, which is filled and foamed in the space between the outer and inner members 102 and 103, is formed by injecting the mixture (of at least the polyol 107, the polyisocyanate 111, the liquid carbon dioxide 108 of which the boiling point is equal to or lower than 0°C under atmospheric pressure, and the liquid cyclopentane 106 that has thermal conductivity lower than the thermal conductivity of the carbon dioxide 108 and is liquid hydrocarbon at normal temperature) into the space, and foaming and hardening the mixture. If not the liquid carbon dioxide 108 but only the cyclopentane 106 is used as the foaming agent that is to be added to the polyol 107 and the polyisocyanate 111, the cyclopentane is evaporated by the heat that is generated by an exothermic reaction between the polyol 107 and the polyisocyanate 111 or the heat that is applied from the outside, as an evaporation heat source, becomes gas, and is expanded. Therefore, time is taken from when the raw materials of the foamed polyurethane resin 104 are injected into the space between the outer and inner members 102 and 103 until the foaming begins to be performed, and the foamed polyurethane resin 104 is hardened until reaching the corners of the space to be filled, so that unfilled portions may be generated. However, if the liquid carbon dioxide 108 of which the boiling point is equal to or lower than 0°C under atmospheric pressure is added, the liquid carbon dioxide 108 is evaporated by the evaporation heat source obtained from the mixture or the surroundings immediately after being mixed with the raw materials of the foamed polyurethane resin 104, so that the liquid carbon dioxide becomes gas and is expanded. Accordingly, the foaming begins to be performed from a low-viscosity state immediately after the raw materials of the foamed polyurethane resin 104 are injected into the space between the outer and inner members 102 and 103, so that the raw materials of the foamed polyurethane resin 104 are uniformly spread by bubbles having low viscosity. Therefore, it may be possible to complete the filling more quickly in a low viscosity state than in the related art, to suppress the generation of unfilled portions, and to reduce the amount of the filling raw materials of the foamed polyurethane resin 104. In addition, since the cyclopentane 106 of which the thermal conductivity is lower than the thermal conductivity of the carbon dioxide 108 in a gas state is used together with the carbon dioxide 108, the thermal conductivity of the molded foamed polyurethane resin 104 is reduced, so that it may be possible to improve the thermal insulation performance of the thermal insulation door 101. Accordingly, if the liquid carbon dioxide 108 of which the boiling point is equal to or lower than 0°C under atmospheric pressure and the liquid cyclopentane 106 that has a thermal conductivity lower than the thermal conductivity of the carbon dioxide 108 and is liquid hydrocarbon at normal temperature are used as the foaming agent that is to be added to the polyol 107 and the polyisocyanate 110, then the low density, high fluidity, high strength and thermal insulation property of the foamed polyurethane resin 104 are easily compatible. Further, since the raw materials are easily managed, obtained, or manufactured, it may be possible to suppress the increase of manufacturing cost.

In the past, the heat that is generated by an exothermic reaction between the polyol 107 and the polyisocyanate 110 (which are raw materials), the heat that is transmitted from the foaming jig, or the like has been added, so that the foaming agent is evaporated and foaming begins to be performed. Accordingly, time is taken from the injection of the raw materials of the foamed polyurethane resin 104 until the beginning of the foaming. For this reason, as compared to when the foaming is performed up to the same volume, in the configuration of this embodiment, it may be possible to suppress the hardening of the foamed polyurethane resin 104 and improve the fluidity of the foamed polyurethane resin 104.

In the case of the method of the first embodiment, since the outer circumferential portion of the inner member 103 becomes the final filled portions of the foamed polyurethane resin 104, most of the foamed polyurethane resin is hardened, so that the fluidity of the foamed polyurethane resin is low. For this reason, it was difficult to fill the protrusions in the method in the related art. However, since it may be possible to improve the fluidity of the foamed polyurethane resin 104 in this embodiment, it may be possible to fill the protrusions 105 with the foamed polyurethane resin 104 and suppress the generation of the unfilled portions that are not filled with the foamed polyurethane resin 104 even though flow resistance is increased at the protrusions 105 formed at the outer circumferential portion of the inner member 103. As a result, it may be possible to reduce appearance defects.

Further, the carbon dioxide 108 is a material that has a boiling point of 79°C below freezing point at substantially atmospheric pressure, has a very high foaming force, is chemically stable, and is also excellent in environmental resistance. If carbon dioxide is used as a foaming agent, the foaming force is large, so that it may be possible to improve the filling property. Accordingly, it may be possible to suppress the generation of the unfilled portions that are not filled with the foamed polyurethane resin 104. Therefore, it may be possible to provide the thermal insulation door 101 that has a high appearance quality.

Meanwhile, the cyclopentane 106, which has been widely used as a non-fluorocarbon material and has a thermal conductivity lower than the thermal conductivity of the carbon dioxide 108 in a gas state, has been used together as a foaming agent. However, the boiling point of the cyclopentane 106 is 49°C, a diffusion rate where the cyclopentane is diffused to the outside of the bubbles is less than a diffusion rate where carbon dioxide 108 is diffused to the outside of the bubbles, and the cyclopentane may lessen the diffusion rate where a material is diffused to the outside of the bubbles, due to high bubble independence. Accordingly, cyclopentane is excellent in thermal insulation performance even over time. Therefore, as compared to when the carbon dioxide 108 is used alone, it may be possible to lower the thermal conductivity of the foamed polyurethane resin 104 and to provide the thermal insulation door 101 having high thermal insulation performance. Further, if hydrofluoro olefin (HFO) (which has a boiling point of 19°C below freezing point at substantially atmospheric pressure, and thermal conductivity lower than the thermal conductivity of the carbon dioxide 108) is used instead of the carbon dioxide 108, it may be possible to further improve the thermal insulation performance of the thermal insulation door 101. Furthermore, the liquid carbon dioxide 108 has been used as a first foaming agent in this embodiment, but supercritical or subcritical carbon dioxide may be used instead of the liquid carbon dioxide 108. The critical point of the carbon dioxide corresponds to 304.1 K and 7.38 MPa, and is lower relatively than the critical point of a material generally used as a supercritical fluid. Accordingly, facilities for manufacturing the supercritical carbon dioxide may be relatively simple.

### (Second embodiment)

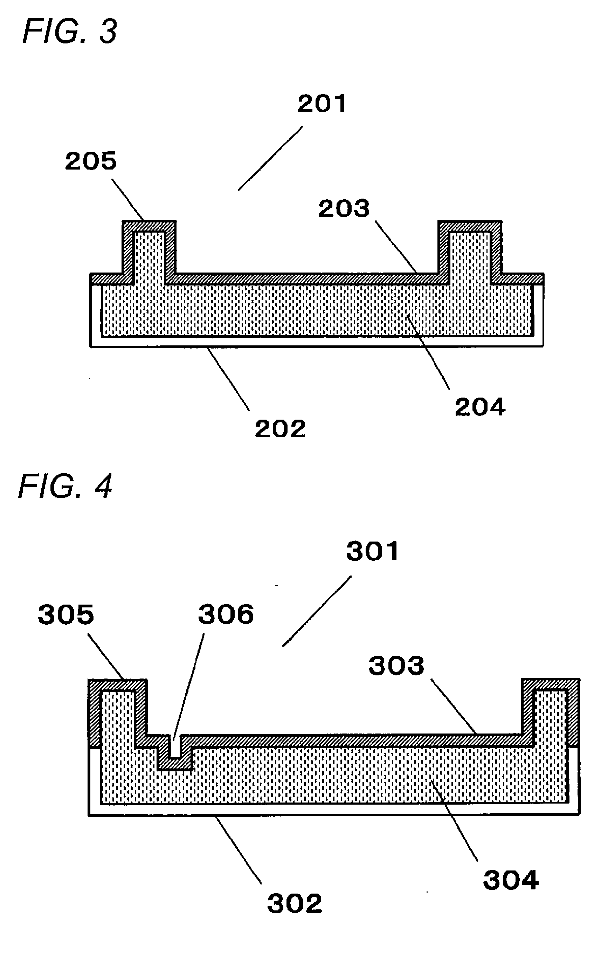

Fig. 3 is a sectional view of a thermal insulation door that is a thermal insulation material according to a second embodiment of the invention. Meanwhile, since a method of manufacturing the thermal insulation door according to the second embodiment is the same as the method of the first embodiment shown in Fig. 2, the description thereof will be omitted.

As shown in Fig. 3, a thermal insulation door 201 according to this embodiment includes outer and inner members 202 and 203 that form the door, and a foamed polyurethane resin 204 that is foamed and filled in a closed space between the outer and inner members 202 and 203. Protrusions 205 are formed inside the outer circumferential portion of the surface of the inner member 203 that is opposite to the surface of the inner member coming in contact with the foamed polyurethane resin 204.

In the thermal insulation door 201 according to this embodiment that is formed as described above, the foamed polyurethane resin 204, which is filled and foamed in the space between the outer and inner members 202 and 203, is formed by injecting the mixture (of at least the polyol 107, the polyisocyanate 111, the liquid carbon dioxide 108 of which the boiling point is equal to or lower than 0°C under atmospheric pressure, and the liquid cyclopentane 106 that has thermal conductivity lower than the thermal conductivity of the carbon dioxide 108 and is liquid hydrocarbon at normal temperature) into the space, and foaming and hardening the mixture. Accordingly, the foaming begins to be performed from a low-viscosity state immediately after the raw materials of the foamed polyurethane resin 204 are injected into the space between the outer and inner members 202 and 203, so that the raw materials of the foamed polyurethane resin 104 are uniformly spread by bubbles having low viscosity and it may be possible to improve the fluidity of the foamed polyurethane resin 204 before hardening. Therefore, even though flow resistance is increased at the protrusions 205 formed at the inner member 203, it may be possible to fill the protrusions 205 with the foamed polyurethane resin 204. As a result, since it may be possible to suppress the generation of the unfilled portions that are not filled with the foamed polyurethane resin 204, it may be possible to reduce appearance defects.

### (Third embodiment)

Fig. 4 is a sectional view of a thermal insulation door that is a thermal insulation material according to a third embodiment of the invention. Meanwhile, since a method of manufacturing the thermal insulation door according to the third embodiment is the same as the method of the first embodiment shown in Fig. 2, the description thereof will be omitted.

As shown in Fig. 4, a thermal insulation door 301 according to this embodiment includes outer and inner members 302 and 303 that form the door, and a foamed polyurethane resin 304 that is foamed and filled in a closed space between the outer and inner members 302 and 303. Protrusions 305 are formed at the outer circumferential portion of the surface of the inner member 303 that is opposite to the surface of the inner member coming in contact with the foamed polyurethane resin 304, and a recess 306 is formed on the inner member at a position which is closer to the center of the inner member than the outer circumferential portion (protrusions 305) of the inner member.

In the thermal insulation door 301 according to this embodiment that is formed as described above, the foamed polyurethane resin 304, which is filled and foamed in the space between the outer and inner members 302 and 303, is formed by injecting the mixture (of at least the polyol 107, the polyisocyanate 111, the liquid carbon dioxide 108 of which the boiling point is equal to or lower than 0°C under atmospheric pressure, and the liquid cyclopentane 106 that has thermal conductivity lower than the thermal conductivity of the carbon dioxide 108 and is liquid hydrocarbon at normal temperature) into the space, and foaming and hardening the mixture. Accordingly, the foaming begins to be performed from a low-viscosity state immediately after the raw materials of the foamed polyurethane resin 304 are injected into the space between the outer and inner members 302 and 303, so that the raw materials of the foamed polyurethane resin 304 are uniformly spread by bubbles having low viscosity and it may be possible to improve the fluidity of the foamed polyurethane resin 304 before hardening. For this reason, if a flow passage becomes narrow because of the recess 306 formed at the inner member 303 and the flow resistance of the foamed polyurethane resin 304 is thus increased, it was difficult to fill the protrusions 305 formed at the outer circumferential portion in the case of the configuration in the related art. However, it may be possible to fill the protrusions 305, which are formed at the outer circumferential portion, with the foamed polyurethane resin 304 in the case of the configuration according to this embodiment. Accordingly, since it may be possible to suppress the generation of the unfilled portions that are not filled with the foamed polyurethane resin 304, it may be possible to reduce appearance defects.

### (Fourth embodiment)

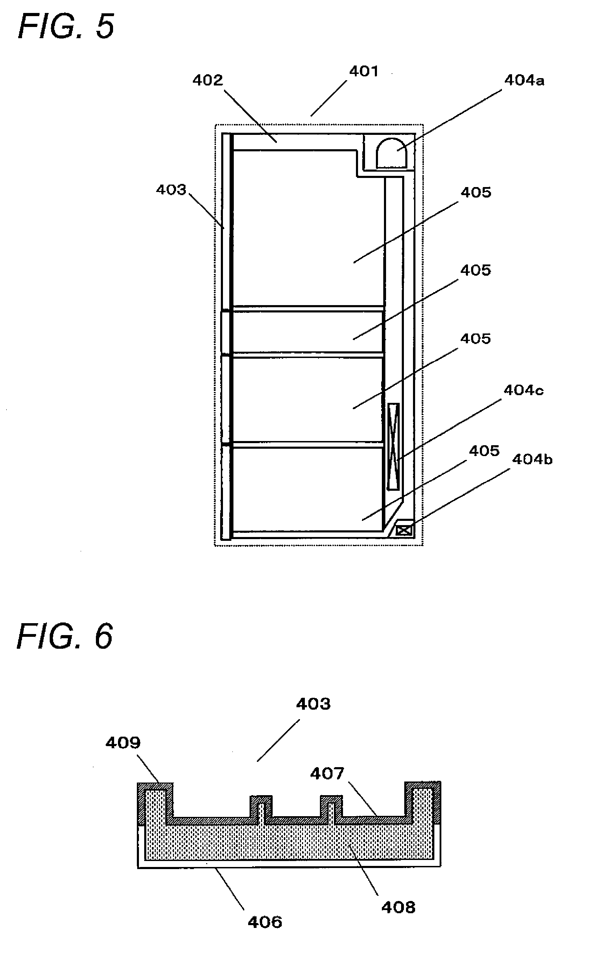

Fig. 5 is a schematic view of a freezing refrigerator according to a fourth embodiment of the invention. Fig. 6 is a sectional view of a thermal insulation door for a refrigerating compartment of the freezing refrigerator according to the fourth embodiment of the invention.

Meanwhile, since a method of manufacturing the thermal insulation door according to the fourth embodiment is the same as the method of the first embodiment shown in Fig. 2, the description thereof will be omitted.

As shown in Figs. 5 and 6, a freezing refrigerator 401 according to this embodiment includes a thermal insulation box 402 that includes an opening in one direction, a thermal insulation door 403 that is provided to close the opening of the thermal insulation box 402, and a refrigerating device 404 that cools a closed space (storage compartment 405) formed by the thermal insulation box 402 and the thermal insulation door 403.

The space, which is formed by the thermal insulation box 402 and the thermal insulation door 403, is used as storage compartments 405, such as a vegetable compartment, a refrigerating compartment, and a freezer compartment. A plurality of thermal insulation doors 403 is provided so as to close the opening of the thermal insulation box 402, and a plurality of storage compartments 405 is formed.

A thermal insulation door 403 for at least the refrigerating compartment, which is formed at the top storage compartment 405 of the freezing refrigerator 401, includes outer and inner members 406 and 407 that form the door, and a foamed polyurethane resin 408 that is foamed and filled in a closed space between the outer and inner members 406 and 407. Protrusions 409 are formed at the outer circumferential portion and middle portions of the surface of the inner member 407 that is opposite to the surface of the inner member coming in contact with the foamed polyurethane resin 408.

For convenience of use, the thermal insulation door 403 for the refrigerating compartment is provided with shelves on which plastic bottles, bottles, eggs, and the like are placed. The protrusions 409 required to fix the shelves are formed at the inner member 407. Not only the protrusions 409 but also recesses may be formed to fix the shelves. Meanwhile, when the thermal insulation door 403 is closed, the protrusions 409 formed at the outer circumferential portion are fitted into the refrigerating compartment, and suppress the leakage of the cold air in the refrigerating compartment. In addition, although not shown, it is effective to mount a gasket or the like on the outer circumferential portion of the protrusions 409 in order to suppress the leakage of the cold air.

The refrigerating device 404 includes a compressor 404a, a condenser 404b, an expanding means (not shown), and an evaporator 404c. Expanding means, such as capillary tubes or expansion valves, are provided between the condenser 404b and the evaporator 404c. The compressor 404a, the condenser 404b, and the evaporator 404c are connected to each other by pipes, and form a refrigeration cycle. Cold air generated by the refrigeration cycle is supplied to the storage compartment 405 and cools the inside of the storage compartment.

The foamed polyurethane resin 408 is foamed and molded by the cyclopentane 106 and the liquid carbon dioxide 108, as in the first embodiment. Meanwhile, when the thermal insulation box 402 is to be filled with the raw materials of the foamed polyurethane resin 408, an inlet is generally formed at the back surface or the bottom surface of the thermal insulation box 402 and an opening is formed at a lower portion so that the raw materials are injected in a longitudinal or transverse direction.

In the thermal insulation door 403 for the refrigerating compartment of the freezing refrigerator that is formed as described above, the foamed polyurethane resin 408, which is filled and foamed in the space between the outer and inner members 406 and 407, is formed by injecting the mixture (of at least the polyol 107, the polyisocyanate 111, the liquid carbon dioxide 108 of which the boiling point is equal to or lower than 0°C under atmospheric pressure, and the liquid cyclopentane 106 that has a thermal conductivity lower than the thermal conductivity of the carbon dioxide 108 and is liquid hydrocarbon at normal temperature) into the space, and foaming and hardening the mixture. Immediately after the liquid carbon dioxide 108 of which the boiling point is equal to or lower than 0°C under atmospheric pressure is mixed with the raw materials of the foamed polyurethane resin 408 as a foaming agent, the liquid carbon dioxide 108 is evaporated by the evaporation heat source obtained from the mixture or the surroundings, so that the liquid carbon dioxide becomes gas and is expanded. Accordingly, the foaming begins to be performed from a low-viscosity state immediately after the raw materials of the foamed polyurethane resin 408 are injected into the space between the outer and inner members 406 and 407, so that the raw materials of the foamed polyurethane resin 408 are uniformly spread by bubbles having low viscosity. Therefore, since fluidity is high, it may be possible to fill the protrusions 409, which are formed at the inner member 407, with the foamed polyurethane resin 408. Further, it may be possible to complete the filling more quickly at a low viscosity state than in the related art, to suppress the generation of unfilled portions, and to reduce the amount of the filling raw materials.

For this reason, since it may be possible to suppress the generation of the unfilled portions that are not filled with the foamed polyurethane resin 408, it may be possible to reduce appearance defects. Since the freezing refrigerator 401 is used at home every day, the appearance quality of the freezing refrigerator is very important. For this purpose, the thermal insulation door 403 having a high appearance quality is provided, so that it may be possible to provide the freezing refrigerator 401 with a high appearance quality.

Meanwhile, the cyclopentane 106, which has been widely used as a non-fluorocarbon material and has a thermal conductivity lower than the thermal conductivity of the carbon dioxide 108 in a gas state, has been used together as well. Accordingly, as compared to when the carbon dioxide 108 is used alone, it may be possible to lower the thermal conductivity of the foamed polyurethane resin 408 and to provide the thermal insulation door 403 having high thermal insulation performance. Therefore, the freezing refrigerator 401 may reduce the heat transmitted to the refrigerating compartment from the outside, so that it may be possible to obtain the freezing refrigerator 401 having low energy consumption. Further, if hydrofluoro olefin (HFO) (which has a boiling point of 19°C below freezing point at substantially atmospheric pressure, and a thermal conductivity lower than the thermal conductivity of the carbon dioxide 108) is used instead of the carbon dioxide 108, it may be possible to further reduce the energy consumption of the freezing refrigerator 401. Furthermore, the liquid carbon dioxide 108 has been used as a first foaming agent in this embodiment, but supercritical or subcritical carbon dioxide may be used instead of the liquid carbon dioxide 108. The critical point of the carbon dioxide corresponds to 304.1 K and 7.38 MPa, and is lower relatively than the critical point of a material generally used as a supercritical fluid. Accordingly, facilities for manufacturing the supercritical carbon dioxide may be relatively simple.

### (Fifth embodiment)

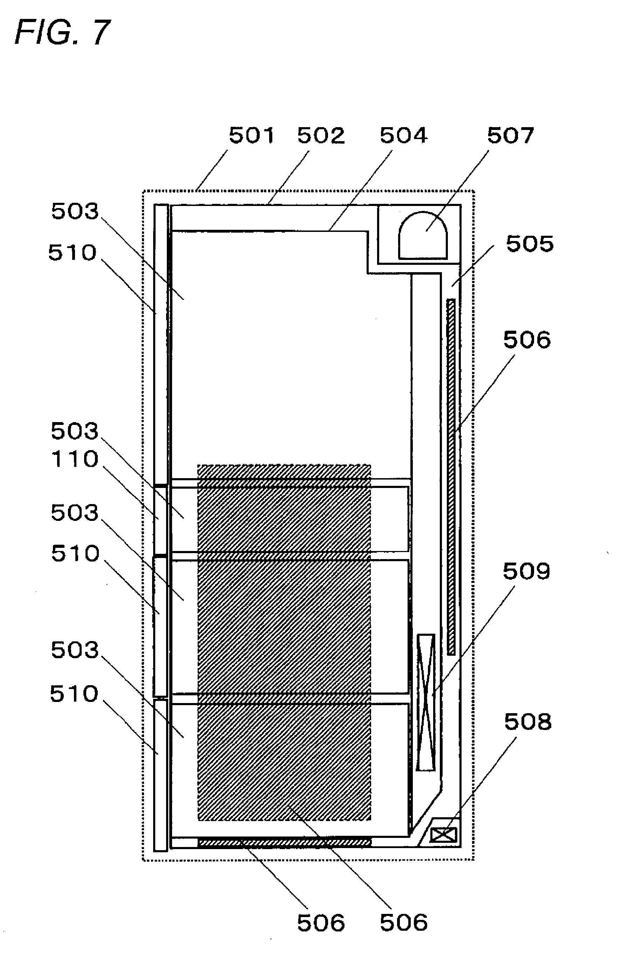

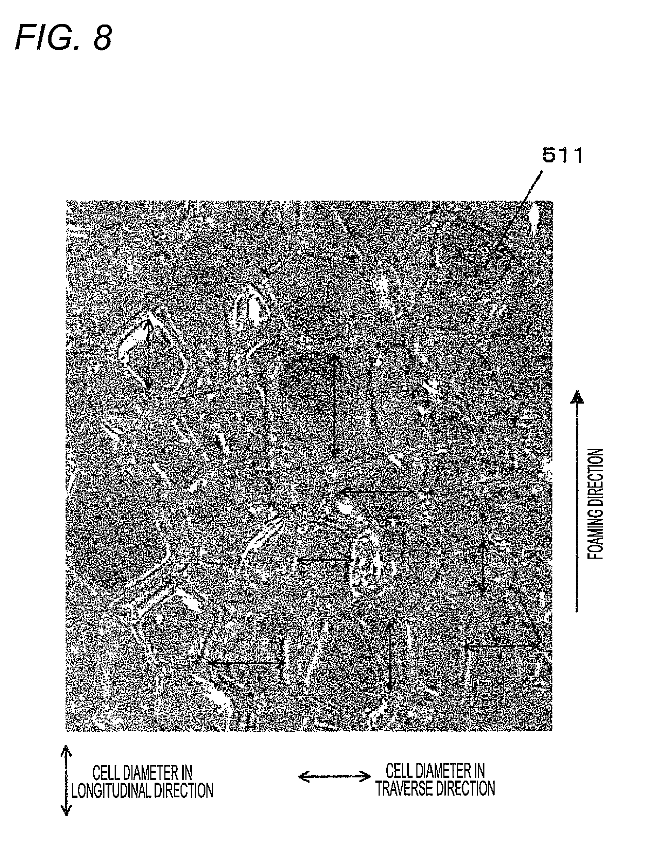

Fig. 7 is a longitudinal sectional view of a freezing refrigerator according to a fifth embodiment of the invention when the freezing refrigerator is cut laterally. Fig. 8 is a microscope photograph showing a cross-section of a foamed polyurethane resin of the freezing refrigerator according to the fifth embodiment in a foaming direction.

As shown in Figs. 7 and 8, a freezing refrigerator 501 includes an outer box 502 that is an outer member forming an outline, and an inner box 504 that is an inner member disposed in the outer box 502 so as to form a storage compartment 503. The temperature of the storage compartment 503 is set according to the storage purpose. Further, an opening and closing door 510 is provided on the front surface of the storage compartment 503.

Wall surfaces (the back surface, the side surface, and the bottom surface), which are formed by the outer and inner boxes 502 and 504, are filled with a thermal insulation material formed of a foamed polyurethane resin 505. In addition, a vacuum thermal insulation material 506, which is a high-performance thermal insulation material, is buried in the foamed polyurethane resin 505.

Further, the freezing refrigerator 501 is provided with a compressor 507, a condenser 508, and an evaporator 509. Expanding means (not shown), such as capillary tubes or expansion valves, are provided between the condenser 508 and the evaporator 509. The compressor 507, the condenser 508, and the evaporator 509 are sequentially connected to each other in an annular shape by pipes, and form a refrigeration cycle. Cold air generated by the refrigeration cycle is supplied to the storage compartment 503 and cools the inside of the storage compartment.

The foamed polyurethane resin 505 is formed by foaming and molding polyol and polyisocyanate through a reaction between the polyol and polyisocyanate while foaming agents of cyclopentane and supercritical carbon dioxide coexist with each other. The foamed polyurethane resin is formed between the outer and inner boxes 502 and 504 so as to have a thickness of about 30 to 100 mm.

Further, assuming that a foaming direction is a longitudinal direction and a direction perpendicular to the foaming direction is a transverse direction, cells 511 of the foamed polyurethane resin 505 are formed so that an average of the ratio of a longitudinal diameter of the cell to a transverse diameter of the cell 511 is in the range of 1.0 to 1.4.

The cell 511 is a bubble that is formed in the foamed polyurethane resin 505. The cell diameter is measured by a microscope while the cross-section of the foamed polyurethane resin is enlarged after the foamed polyurethane resin 505 is cut in the foaming direction.

The greatest length of each of the cells 511 in the foaming direction is measured as the longitudinal diameter of each of the cells 511, the largest length of each of the cells in the direction perpendicular to the foaming direction is measured as the transverse diameter of each of the cells, and the averages thereof are obtained. Then, the ratio of the transverse diameter of the cell to the longitudinal diameter of the cell 511 is obtained. The transverse diameter of the cell 511 in this embodiment is 90 µm. The closed cell content of the foamed polyurethane resin 505 is 95%.

A thermal conductivity represents thermal insulation performance. The thermal conductivity of the foamed polyurethane resin 505, which is foamed and molded, is about 0.02 W/mK, and the thermal conductivity of the vacuum thermal insulation material 506 is equal to or less than about 0.003 W/mK.

In order to bury the vacuum thermal insulation material 506 in the foamed polyurethane resin 505 as described above, the vacuum thermal insulation material 506 is previously disposed between the outer and inner boxes 502 and 504, and the mixture of polyol and isocyanate is injected into the space that is formed by the outer box 502, the inner box 504, and the vacuum thermal insulation material 506.

In this case, since the vacuum thermal insulation material 506 becomes an obstacle, the fluidity of the mixture needs to be excellent. If a foaming agent coexists with polyol or isocyanate as in this embodiment, the viscosity of the mixture is reduced and the fluidity thereof is improved.

In this case, as for the foaming agents, cyclopentane is used as the main foaming agent and carbon dioxide is used together as a sub-foaming agent. Carbon dioxide of which the amount is 1.0 wt% or less based on the amount of foamed polyurethane resin 505 is added, and is mixed with polyol before the polyol and isocyanate are mixed with each other. It is preferable that the carbon dioxide be mixed with the polyol, but the carbon dioxide may be mixed with the isocyanate. Further, supercritical carbon dioxide having high diffusivity and an excellent mixing property has been mixed, but subcritical or liquid carbon dioxide may be mixed. Meanwhile, supercritical carbon dioxide is most preferable in terms of diffusivity and a mixing property, but liquid carbon dioxide is most easily obtained or manufactured. Cyclopentane may have been previously mixed with polyol, or may be mixed with polyol before being mixed with carbon dioxide.

As described above, the freezing refrigerator 501 according to this embodiment also uses cyclopentane, which has a thermal conductivity lower than the thermal conductivity of carbon dioxide in a gas state, together as a foaming agent, and improves bubble independence. Accordingly, the freezing refrigerator is excellent in thermal insulation performance. Further, a diffusion rate where the cyclopentane is diffused to the outside of the bubbles is lower than a diffusion rate where carbon dioxide is diffused to the outside of the bubbles, and the cyclopentane may lessen the diffusion rate where a material is diffused to the outside of bubbles because of high bubble independence. Accordingly, cyclopentane is excellent in thermal insulation performance even over time. As a result, it may be possible to obtain the freezing refrigerator 501 that is excellent in thermal insulation performance over time and is eco-friendly in terms of energy saving.

Further, if cyclopentane and supercritical carbon dioxide are used as well, the miniaturization of the cell 511 occurs and the shape of the cell 511 elongated in the foaming direction may be generally suppressed, so that a ratio of the longitudinal diameter of the cell to the transverse diameter of the cell 511 may be in the range of 1.0 to 1.4. As a result, the bubble orientation ratio approaches 1, so that thermal conductivity may be lowered and it may be possible to obtain the freezing refrigerator 501 that is eco-friendly in terms of energy saving.

Preferably, if the average of the ratio of the longitudinal diameter of the cell to the transverse diameter of the cell 511 is set in the range of 1.0 to 1.18, it may be possible to considerably lower thermal conductivity and to obtain the freezing refrigerator 501 that is eco-friendly in terms of energy saving.

Further, if the average of the ratio of the longitudinal diameter of the cell to the transverse diameter of the cell 511 is in the range of 1.0 to 1.4 and the cell 511 approaches a sphere, it may be possible to increase the compressive strength in a wall thickness direction (thickness direction) because of high bubble independence and the slow decrease of the internal pressure of the bubbles.

Accordingly, if the density is decreased, compressive strength is generally decreased. However, since it may be possible to maintain the compressive strength in the related art even though density is decreased, it may be possible to reduce the amount of the raw materials of polyurethane and to obtain the eco-friendly freezing refrigerator 501.

Further, the thermal conductivity of the vacuum thermal insulation material 506 is significantly lower than that of the foamed polyurethane resin 505. For this reason, if the vacuum thermal insulation material 506 and the foamed polyurethane resin 505 are used together as well (compounded), it may be possible to further improve the thermal insulation performance of the freezing refrigerator 501 and to obtain the freezing refrigerator 501 that is eco-friendly in terms of energy saving.

Furthermore, if the transverse diameter of the cell 511 is larger than 150 µm, the cell 511 is excessively large, so that the number of cells is decreased. Accordingly, carbon dioxide or cyclopentane is apt to be diffused and is substituted with air, so that thermal conductivity is lowered over time. In contrast, if the transverse diameter of the cell is less than 10 µm, the density of polyurethane is increased and thermal conductivity is lowered. Since the transverse diameter of the cell 511 is 90 µm in this embodiment, it may be possible to lower the thermal conductivity and to obtain the freezing refrigerator 501 that is eco-friendly in terms of energy saving.

If the thickness of the foamed polyurethane resin 505 is less than 30 mm, it is difficult to perform the filling and foaming of the foamed polyurethane resin. Accordingly, it is difficult to make the average of the ratio of the longitudinal diameter of the cell to the transverse diameter of the cell 511 be in the range of 1.0 to 1.4. Further, even though the thickness of the foamed polyurethane resin 505 is greater than 100 mm, there is a problem in that the size of the cell 511 is apt to be increased and thermal conductivity rises. Since the thickness of the foamed polyurethane resin 505 is in the range of 30 to 100 mm in this embodiment, it may be possible to obtain the freezing refrigerator 501 that is excellent in thermal insulation performance and is eco-friendly in terms of energy saving.

Furthermore, if the amount of supercritical carbon dioxide based on the amount of polyurethane is less than 0.05 wt%, it is not possible to obtain the miniaturization effect that is caused by carbon dioxide. Moreover, if the amount of supercritical carbon dioxide based on the amount of polyurethane is greater than 2.0 wt%, many voids are generated. For this reason, there is a problem in that closed cell content is lowered and thermal conductivity rises. Further, compressive strength is also decreased. Since the amount of supercritical carbon dioxide based on the amount of polyurethane is 1.0 wt% in this embodiment, the miniaturization of the cell 511 occurs. Furthermore, it may be possible to make closed cell content be equal to or greater than 90% and be less than 100% and to make the average of the ratio of the longitudinal diameter of the cell to the transverse diameter of the cell 511 be in the range of 1.0 to 1.4, preferably 1.0 to 1.18. Therefore, it may be possible to obtain the freezing refrigerator 501 that is excellent in thermal insulation performance and is eco-friendly in terms of energy saving. In addition, it may be possible to increase the compressive strength in the wall thickness direction (thickness direction). Accordingly, it may be possible to maintain the strength in the related art even though density is decreased, so that it may be possible to reduce the amount of the raw materials of polyurethane. As a result, it may be possible to obtain the eco-friendly freezing refrigerator 501.

### (Sixth embodiment)

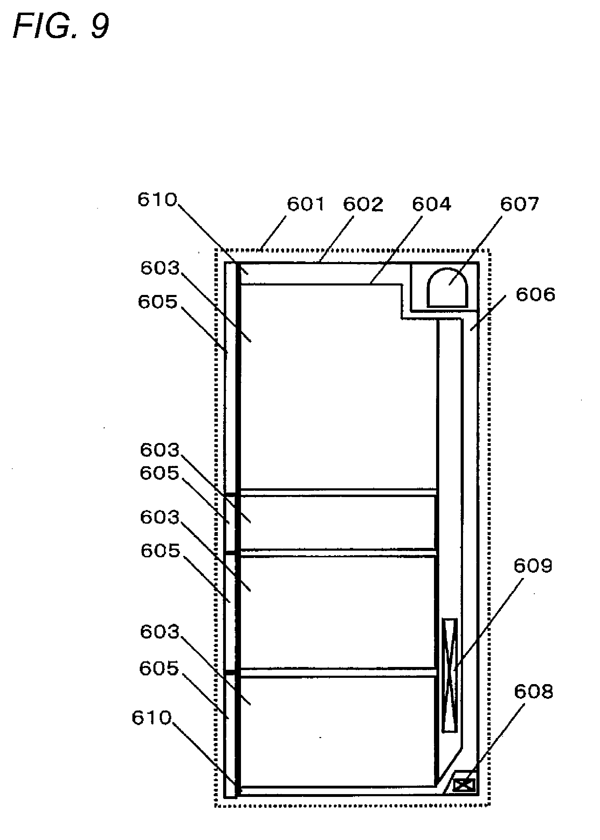

Fig. 9 is a longitudinal sectional view of a freezing refrigerator according to a sixth embodiment of the invention when the freezing refrigerator is cut laterally.

As shown in Fig. 9, a freezing refrigerator 601 includes an outer box 602 that is an outer member forming an outline, and an inner box 604 that is an inner member disposed in the outer box 602 so as to form a storage compartment 603. The temperature of the storage compartment 603 is set according to the storage purpose. Further, an opening and closing door 605 is provided on the front surface of the storage compartment 603.

The wall surfaces (the back surface, side surface, and bottom surface), which are formed by the outer and inner boxes 602 and 604, are filled with a thermal insulation material formed of a foamed polyurethane resin 606.

Further, the freezing refrigerator 601 is provided with a compressor 607, a condenser 608, and an evaporator 609. Expanding means (not shown), such as capillary tubes or expansion valves, are provided between the condenser 608 and the evaporator 609. The compressor 607, the condenser 608, and the evaporator 609 are sequentially connected to each other in an annular shape by pipes, and form a refrigeration cycle. Cold air generated by the refrigeration cycle is supplied to the storage compartment 603 and cools the inside of the storage compartment.

The foamed polyurethane resin 606 is formed by foaming and molding polyol and polyisocyanate through a reaction between the polyol and polyisocyanate while foaming agents of cyclopentane and supercritical carbon dioxide coexist with each other. The foamed polyurethane resin is formed between the outer and inner boxes 602 and 604 so as to have a thickness of about 30 to 100 mm.

The closed cell content of the foamed polyurethane resin 606 is 95%. The closed cell content means a ratio of independent bubbles to the total bubbles of the foamed polyurethane resin 606. If cyclopentane and carbon dioxide are used together as well, the miniaturization of the cell 511 (see Fig. 8) occurs and the shape of the cell 511 elongated in a direction perpendicular to the wall thickness may be generally suppressed, so that it may be possible to increase the compressive strength in a wall thickness direction.

For this reason, assuming that a foaming direction is a longitudinal direction and a direction perpendicular to the foaming direction is a transverse direction, an average of the ratio of the longitudinal diameter of the cell to the transverse diameter of the cell 511 is in the range of 1.0 to 1.25 at the portions except for the flanges 610 by adding carbon dioxide to the portions except for the flanges. In contrast, an average of the ratio of the longitudinal diameter of the cell to the transverse diameter of the cell 511 is in the range of 1.25 to 1.4 at the flanges 610 by reducing the amount of added carbon dioxide at the flanges.

The core density of the foamed polyurethane resin 606 of the flange 610 is 30 kg/m³, and the core density of the foamed polyurethane resin 606 of the other portion is 27 kg/m³. The core density means the density of a portion of the foamed polyurethane resin except for a skin layer that is formed on the surface of the foamed polyurethane resin 606. In the case of the freezing refrigerator 601, the foaming direction is a direction perpendicular to the wall thickness. The core density of the flange 610 means the core density of a portion of the foamed polyurethane resin 606, which is within the depth of about 10 cm, of the flange.

The cell 511 is a bubble that is formed in the foamed polyurethane resin 606. The cell diameter is measured by a microscope while the cross-section of the foamed polyurethane resin is enlarged after the foamed polyurethane resin 606 is cut in the foaming direction.

The largest length of each of the cells 511 in the foaming direction is measured as the longitudinal diameter of each of the cells 511, the largest length of each of the cells in the direction perpendicular to the foaming direction is measured as the transverse diameter of each of the cells, and the averages thereof are obtained. Then, the ratio of the transverse diameter of the cell to the longitudinal diameter of the cell 511 is obtained. The transverse diameter of the cell 511 in this embodiment is 90 µm.

Thermal conductivity represents thermal insulation performance. The thermal conductivity of the foamed polyurethane resin 606, which is foamed and molded, is about 0.02 W/mK. As for the foaming agents, cyclopentane is used as the main foaming agent and carbon dioxide is used together as a sub-foaming agent.

0.25 wt% of carbon dioxide based on the amount of foamed polyurethane resin 606 is added to the flanges 610, and 1.00 wt% of carbon dioxide based on the amount of foamed polyurethane resin 606 is added to the portions except flanges 610.

Carbon dioxide is mixed with polyol before polyol and isocyanate are mixed with each other. It is preferable that carbon dioxide be mixed with the polyol, but carbon dioxide may be mixed with the isocyanate. Further, supercritical carbon dioxide having high diffusivity and an excellent mixing property has been mixed, but subcritical or liquid carbon dioxide may be mixed. Meanwhile, supercritical carbon dioxide is most preferable in terms of diffusivity and a mixing property, but liquid carbon dioxide is most easily obtained or manufactured. Cyclopentane may have been previously mixed with polyol, or may be mixed with polyol before being mixed with carbon dioxide.

As described above, the freezing refrigerator 601 according to this embodiment also uses cyclopentane, which has a thermal conductivity lower than the thermal conductivity of carbon dioxide in a gas state, as a foaming agent, and improves bubble independence. Accordingly, the freezing refrigerator is excellent in thermal insulation performance. Further, a diffusion rate where the cyclopentane is diffused to the outside of the bubbles is lower than a diffusion rate where carbon dioxide is diffused to the outside of the bubbles, and the cyclopentane may lessen the diffusion rate where a material is diffused to the outside of bubbles because of high bubble independence. Accordingly, cyclopentane is excellent in thermal insulation performance even over time. As a result, it may be possible to obtain the freezing refrigerator 601 that is excellent in thermal insulation performance to start with as well as over time and is eco-friendly in terms of energy saving.

Further, if cyclopentane and carbon dioxide are used together as well, the miniaturization of the cell 511 occurs and it may be possible to generally suppress the shape of the cell 511 elongated in a direction perpendicular to the wall thickness and to increase compressive strength in the wall thickness direction.

For this reason, it may be possible to make an average of the ratio of the longitudinal diameter of the cell to the transverse diameter of the cell 511 be in the range of 1.0 to 1.25 at portions except for the flanges 610 by adding carbon dioxide to the portions except for the flanges, and to increase the compressive strength in the wall thickness direction. In contrast, it may be possible to make an average of the ratio of the longitudinal diameter of the cell to the transverse diameter of the cell 511 in the range of 1.25 to 1.4 at the flanges 610 by reducing the amount of added carbon dioxide at the flanges, and to increase the compressive strength in a direction perpendicular to the wall thickness direction.

Accordingly, it may be possible to maintain strength even though density is decreased, so that it may be possible to reduce the amount of the raw materials of the foamed polyurethane resin 606. As a result, it may be possible to obtain the eco-friendly freezing refrigerator 601. In addition, if the average of the ratio of the longitudinal diameter of the cell of the foamed polyurethane resin 106 of the portion except for the flange 610 to the transverse diameter thereof is set in the range of 1.0 to 1.18, the anisotropy of the cell 511 is improved. Accordingly, it may be possible to further increase the compressive strength in the wall thickness direction.

Therefore, it may be possible to maintain the strength required for the freezing refrigerator 601 even though density is further decreased, so that it may be possible to reduce the amount of the raw materials of the foamed polyurethane resin 606. As a result, it may be possible to obtain the eco-friendly freezing refrigerator 601.

Further, since the average of the ratio of the longitudinal diameter of the cell of the flange to the transverse diameter of the cell 511 of the flange 610 is in the range of 1.25 to 1.4, the compressive strength of the flange is lower than that of the portion except for the flange 610. However, since the density of the flange is higher than that of the portion except for the flange 610, it may be possible to secure the strength of the flange in the wall thickness direction.

Therefore, if the strength is deficient even though the strength is improved by optimizing the cell diameter ratio, the deficiency may be compensated for by the difference in the density at the portions of the freezing refrigerator 601. Accordingly, it may be possible to reduce the amount of the raw materials of the foamed polyurethane resin 606. As a result, it may be possible to obtain an eco-friendly freezing refrigerator 601. Further, since density may be increased or decreased by the adjustment of the amount of added carbon dioxide, it may be possible easily to increase or decrease density. Furthermore, even if strength is secured only by increasing density in the same manner as the cell diameter ratio of the portion except for the flange 610, the amount of raw materials is increased in comparison with the method for this embodiment.

Moreover, if the core density is 20 kg/m³ or less, it may not be possible to secure the strength required for the freezing refrigerator 601 even though the average of the ratio of the longitudinal diameter of the cell to the transverse diameter of the cell 511 is decreased. Further, if the core density is 37 kg/m³ or more, the foam pressure of polyurethane is significantly increased. As a result, appearance defects, such as deformation and leakage of polyurethane resin, are caused. In addition, if the upper limit of the core density of the thermal insulation material is 35 kg/m³, it may be possible to reduce the weight of the freezing refrigerator by decreasing the core density of the foamed polyurethane resin. Since the core density of the thermal insulation material is in the range of 20 to 35 kg/m³ in this embodiment, appearance defects are suppressed and density is decreased, so that it may be possible to secure the strength required for the freezing refrigerator 601.

Further, if the wall thickness is less than 30 mm, it is difficult to perform the filling and foaming and to lessen the average of the ratio of the longitudinal diameter of the cell to the transverse diameter of the cell 511. Furthermore, even if the wall thickness is greater than 100 mm, there is a problem in that the size of the cell 511 is apt to be increased and it is difficult to lessen the average of the ratio of the longitudinal diameter of the cell to the transverse diameter of the cell 511. Since the wall thickness is in the range of 30 to 100 mm in this embodiment, it may be possible to increase the compressive strength in the wall thickness direction while decreasing the density.

Moreover, if the amount of carbon dioxide based on the amount of the foamed polyurethane resin 606 is less than 0.05 wt%, the increase of the number of cells 511 caused by carbon dioxide is limited and it may not be possible to decrease the density or to improve the compressive strength. Further, if the amount of carbon dioxide based on the amount of polyurethane is greater than 2.0 wt%, many voids are generated, so that the compressive strength is decreased. Since the amount of carbon dioxide based on the amount of urethane resin is in the range of 0.05 to 2.0 wt% in this embodiment, the amount of the raw materials is small. Accordingly, it may be possible to obtain the eco-friendly freezing refrigerator.

### Example

The relationship between compressive strength and a void with respect to the amount of carbon dioxide added to the foamed polyurethane resin 606, which is to be applied to a freezing refrigerator, will be described below by examples and a comparative example.

The foamed polyurethane resin 606 was cut out from the freezing refrigerator, and thermal conductivity, density, compressive strength, and voids were evaluated. It was determined whether the compressive strength was the strength that might be applied to the freezing refrigerator 601.

The examples are shown in Table 1.

**[Table 1]**

| | Example 1 | Example 2 | Example 3 | Example 4 | Example 5 | Example 6 | Example 7 | Example 8 | Example 9 | Example 10 |
|---|---|---|---|---|---|---|---|---|---|---|
| | Comparative example | Flange | | | | Back surface | | | | |
| Amount of added co₂ (wt%) | 0 | 0.02 | 0.05 | 0.5 | 1 | 0.5 | 0.5 | 1 | 2 | 2.5 |
| Thermal conductivity (w/mk) | 0.02 | 0.02 | 0.0201 | 0.0201 | 0.0202 | 0.0201 | 0.0201 | 0.0202 | 0.0202 | 0.0203 |
| Density (kg/m3) | 30.8 | 30.8 | 29.6 | 28.5 | 27 | 28.5 | 28.5 | 27 | 26.8 | 26 |
| Ratio of longitudinal diameter of cell to transverse diameter of cell | 1.5 | 1.49 | 1.4 | 1.25 | 1.18 | 1.3 | 1.25 | 1.18 | 1.05 | 1.05 |
| Compressive strength in wall thickness direction | O | O | O | O | O | × | O | O | O | × |
| Compressive strength in direction perpendicular to wall thickness | O | O | O | O | × | O | O | O | O | O |
| Void | few | few | few | few | few | few | few | few | few | many |

Examples of the flange will be described. Since the amount of added carbon dioxide is small (that is, 0.02 wt%) in Example 2, the density of Example 2 is not decreased in comparison with that of a comparative example in Example 1. In contrast, since the amount of added carbon dioxide is 1.0 wt% in Example 5 and the compressive strength in the direction perpendicular to the wall thickness are deficient, Example 5 may not be applied to the freezing refrigerator. In Examples 3 and 4, density may be decreased and compressive strength may also be secured.

Further, the foamed polyurethane resin 606 of the back surface was cut out as the foamed polyurethane resin 606 of the portion except for the flange, and was evaluated.

Since the compressive strength required in the direction perpendicular to the wall thickness is low on the back surface, all Examples 6 to 10 have no problem with the compressive strength in the direction perpendicular to the wall thickness. In Examples 7 to 9, density may be decreased and the decrease of the compressive strength caused by the decrease of the density may be prevented by changing the cell structure. Accordingly, Examples 7 to 9 may be applied to the freezing refrigerator 601.

In Example 6, density may be decreased but the ratio of the longitudinal diameter of the cell to the transverse diameter of the cell is 1.3, so that the compressive strength in the wall thickness direction is deficient. For this reason, Example 6 may not be applied to the freezing refrigerator. Further, 2.5 wt% of carbon dioxide is added to Example 10, so that many voids are generated. Therefore, the compressive strength is decreased. For this reason, Example 10 may not be applied to the freezing refrigerator.

From the above-mentioned results, it may be possible to decrease the density and secure the compressive strength if the ratio of the longitudinal diameter of the cell to the transverse diameter of the cell is set in the range of 1.25 to 1.4 at the flange, and it may be possible to compatibly decrease compatibly the density and secure the compressive strength if the ratio of the longitudinal diameter of the cell to the transverse diameter of the cell is set to 1.25 or less at the portion except for the flange. If the ratio of the longitudinal diameter of the cell to the transverse diameter of the cell is preferably set to 1.18 or less, it may be possible to further decrease the density. Further, if the amount of added carbon dioxide is set in the range of 0.05 to 2.0, it may be possible to suppress the decrease of the density and the generation of voids. If the ratio of the longitudinal diameter of the cell to the transverse diameter of the cell is adjusted, it may be possible to obtain a foamed polyurethane resin that may be applied to the freezing refrigerator while the density is decreased.

The invention has been described in detail with reference to specific embodiments, but it will be apparent to those skilled in the art that various modifications and changes may be made thereto without departing from the scope and spirit of the invention.

The application is based on Japanese Patent Application No. 2008-185569 filed in the Japanese Patent Office on July 17, 2008, Japanese Patent Application No. 2008-236099 filed in the Japanese Patent Office on September 16, 2008, Japanese Patent Application No. 2008-266007 filed in the Japanese Patent Office on October 15, 2008, Japanese Patent Application No. 2008-267017 filed in the Japanese Patent Office on October 16, 2008, and Japanese Patent Application No. 2009-073334 filed in the Japanese Patent Office on March 25, 2009, and the entire contents thereof are incorporated herein by reference.

### Industrial Applicability

The invention has advantages that prevent the waste of raw materials by forming a foamed polyurethane resin at a low density and making the density uniform, and may be applied to a freezing refrigerator.

### Disclosure of Reference Numerals and Signs

- 101:: THERMAL INSULATION DOOR
- 102:: OUTER MEMBER
- 103:: INNER MEMBER
- 104:: FOAMED POLYURETHANE RESIN
- 105:: PROTRUSION
- 106:: CYCLOPENTANE
- 108:: CARBON DIOXIDE
- 201:: THERMAL INSULATION DOOR
- 202:: OUTER MEMBER
- 203:: INNER MEMBER
- 204:: FOAMED POLYURETHANE RESIN
- 205:: PROTRUSION
- 301:: THERMAL INSULATION DOOR
- 302:: OUTER MEMBER
- 303:: INNER MEMBER
- 304:: FOAMED POLYURETHANE RESIN
- 305:: PROTRUSION
- 306:: RECESS
- 401:: FREEZING REFRIGERATOR
- 402:: THERMAL INSULATION BOX
- 403:: THERMAL INSULATION DOOR
- 404:: REFRIGERATING DEVICE
- 405:: STORAGE COMPARTMENT
- 406:: OUTER MEMBER
- 407:: INNER MEMBER
- 408:: FOAMED POLYURETHANE RESIN
- 409:: PROTRUSION
- 501:: FREEZING REFRIGERATOR
- 502:: OUTER BOX
- 504:: INNER BOX
- 505:: FOAMED POLYURETHANE RESIN
- 506:: VACUUM THERMAL INSULATION MATERIAL
- 511:: CELL
- 601:: FREEZING REFRIGERATOR
- 602:: OUTER BOX
- 604:: INNER BOX
- 606:: FOAMED POLYURETHANE RESIN
- 610:: FLANGE

## Claims

1. A thermal insulation material comprising:
a foamed polyurethane resin that is filled and foamed in a space between outer and inner members,
wherein the foamed polyurethane resin is formed by injecting the mixture of at least a polyol component, a polyisocyanate component, a supercritical, subcritical, or liquid first foaming agent of which the boiling point is equal to or lower than 0°C under atmospheric pressure, and a second liquid foaming agent that has a thermal conductivity lower than the thermal conductivity of the first foaming agent and is liquid hydrocarbon at normal temperature, to the space, and foaming and hardening the mixture.

2. The thermal insulation material according to claim 1,
wherein the inner member includes recesses or protrusions.

3. The thermal insulation material according to claim 2,
wherein the recesses or protrusions of the inner member are provided at at least a part of the outer circumferential portion of the inner member.

4. The thermal insulation material according to any one of claims 1 to 3,
wherein the first foaming agent is carbon dioxide.

5. The thermal insulation material according to any one of claims 1 to 4,
wherein the second foaming agent is cyclopentane.

6. The thermal insulation material according to any one of claims 1 to 5,
wherein assuming that a foaming direction is a longitudinal direction and a direction perpendicular to the foaming direction is a transverse direction, an average of a ratio of a longitudinal diameter of a cell of the foamed polyurethane resin to a transverse diameter of the cell is in the range of 1.0 to 1.4, and
closed cell content is equal to or greater than 90% and is less than 100%.

7. The thermal insulation material according to claim 6,
wherein the average of the ratio of the longitudinal diameter of the cell to the transverse diameter of the cell is in the range of 1.0 to 1.18.

8. The thermal insulation material according to any one of claims 1 to 7, further comprising:
a vacuum thermal insulation material that is provided in the space between outer and inner members, in addition to the foamed polyurethane resin.

9. The thermal insulation material according to any one of claims 6 to 8,
wherein the average of the transverse diameter of the cell is in the range of 10 to 150 µm.

10. The thermal insulation material according to any one of claims 1 to 9,
wherein the thickness of the foamed polyurethane resin is in the range of 30 to 100 mm.

11. A thermal insulation box that is formed by forming the thermal insulation material according to any one of claims 1 to 10 in a box shape.

12. A thermal insulation door comprising:
the thermal insulation material according to any one of claims 1 to 10.

13. A freezing refrigerator comprising:
a box that includes an opening in one direction;
a door that is provided so as to form a closed space by closing the opening of the box; and
a refrigerating device that cools the closed space formed by the box and the door,
wherein the box is the thermal insulation box according to claim 11.

14. A freezing refrigerator comprising:
a box that includes an opening in one direction;
a door that is provided so as to form a closed space by closing the opening of the box; and
a refrigerating device that cools the closed space formed by the box and the door,
wherein the door is the thermal insulation door according to claim 12.

15. The freezing refrigerator according to claim 13 or 14,
wherein closed cell content is equal to or greater than 90% and is less than 100%, and
assuming that a foaming direction is a longitudinal direction and a direction perpendicular to the foaming direction is a transverse direction, an average of a ratio of a longitudinal diameter of a cell of the foamed polyurethane resin of a flange of the box to a transverse diameter of the cell thereof is in the range of 1.25 to 1.4, and an average of a ratio of a longitudinal diameter of a cell of the foamed polyurethane resin of a portion of the box except for the flange to a transverse diameter of the cell thereof is in the range of 1.0 to 1.25.

16. The freezing refrigerator according to claim 15,
wherein the average of the ratio of the longitudinal diameter of the cell of the foamed polyurethane resin of the portion of the box except for the flange to the transverse diameter of the cell thereof is in the range of 1.0 to 1.18.

17. The freezing refrigerator according to claim 15 or 16,
wherein the core density of the foamed polyurethane resin of the flange of the box is larger than that of the foamed polyurethane resin of the portion of the box except for the flange.

18. The freezing refrigerator according to any one of claims 15 to 17,
wherein the core density of the foamed polyurethane resin is in the range of 20 to 37 kg/m³.

19. The freezing refrigerator according to claim 18,
wherein the core density of the foamed polyurethane resin is 35 kg/m³ or less.

20. The freezing refrigerator according to any one of claims 15 to 19,
wherein the thickness of the space between the outer and inner members is in the range of 30 to 100 mm.

## Amended claims

### Amended claims under Art. 19.1 PCT

**1.** A thermal insulation material comprising:
a foamed polyurethane resin that is filled and foamed in a space between outer and inner members,
wherein the foamed polyurethane resin is formed by injecting the mixture of at least a polyol component, a polyisocyanate component, a supercritical, subcritical, or liquid first foaming agent of which the boiling point is equal to or lower than 0°C under atmospheric pressure, and a second liquid foaming agent that has a thermal conductivity lower than the thermal conductivity of the first foaming agent and is liquid hydrocarbon at normal temperature, to the space, and foaming and hardening the mixture and
wherein the inner member includes recesses or protrusions.

**2.** The thermal insulation material according to claim 1,
wherein the recesses or protrusions of the inner member are provided at at least a part of the outer circumferential portion of the inner member.

**3.** The thermal insulation material according to claim 1 or 2,
wherein the first foaming agent is carbon dioxide.

**4.** The thermal insulation material according to any one of claims 1 to 3,
wherein the second foaming agent is cyclopentane.

**5.** The thermal insulation material according to any one of claims 1 to 4,
wherein assuming that a foaming direction is a longitudinal direction and a direction perpendicular to the foaming direction is a transverse direction, an average of a ratio of a longitudinal diameter of a cell of the foamed polyurethane resin to a transverse diameter of the cell is in the range of 1.0 to 1.4, and
closed cell content is equal to or greater than 90% and is less than 100%.

**6.** The thermal insulation material according to claim 5,
wherein the average of the ratio of the longitudinal diameter of the cell to the transverse diameter of the cell is in the range of 1.0 to 1.18.

**7.** The thermal insulation material according to any one of claims 1 to 6, further comprising:
a vacuum thermal insulation material that is provided in the space between outer and inner members, in addition to the foamed polyurethane resin.

**8.** The thermal insulation material according to any one of claims 5 to 7,
wherein the average of the transverse diameter of the cell is in the range of 10 to 150 µm.

**9.** The thermal insulation material according to any one of claims 1 to 8,
wherein the thickness of the foamed polyurethane resin is in the range of 30 to 100 mm.

**10.** A thermal insulation box that is formed by forming the thermal insulation material according to any one of claims 1 to 9 in a box shape.

**11.** A thermal insulation door comprising:
the thermal insulation material according to any one of claims 1 to 10.

**12.** A freezing refrigerator comprising:
a box that includes an opening in one direction;
a door that is provided so as to form a closed space by closing the opening of the box; and
a refrigerating device that cools the closed space formed by the box and the door,
wherein the box is the thermal insulation box according to claim 10.

**13.** A freezing refrigerator comprising:
a box that includes an opening in one direction;
a door that is provided so as to form a closed space by closing the opening of the box; and
a refrigerating device that cools the closed space formed by the box and the door,
wherein the door is the thermal insulation door according to claim 11.

**14.** The freezing refrigerator according to claim 12 or 13,
wherein closed cell content is equal to or greater than 90% and is less than 100%, and
assuming that a foaming direction is a longitudinal direction and a direction perpendicular to the foaming direction is a transverse direction, an average of a ratio of a longitudinal diameter of a cell of the foamed polyurethane resin of a flange of the box to a transverse diameter of the cell thereof is in the range of 1.25 to 1.4, and an average of a ratio of a longitudinal diameter of a cell of the foamed polyurethane resin of a portion of the box except for the flange to a transverse diameter of the cell thereof is in the range of 1.0 to 1.25.

**15.** The freezing refrigerator according to claim 14,
wherein the average of the ratio of the longitudinal diameter of the cell of the foamed polyurethane resin of the portion of the box except for the flange to the transverse diameter of the cell thereof is in the range of 1.0 to 1.18.

**16.** The freezing refrigerator according to claim 14 or 15,
wherein the core density of the foamed polyurethane resin of the flange of the box is larger than that of the foamed polyurethane resin of the portion of the box except for the flange.

**17.** The freezing refrigerator according to any one of claims 14 to 16,
wherein the core density of the foamed polyurethane resin is in the range of 20 to 37 kg/m³.

**18.** The freezing refrigerator according to claim 17,
wherein the core density of the foamed polyurethane resin is 35 kg/m³ or less.

**19.** The freezing refrigerator according to any one of claims 14 to 18,
wherein the thickness of the space between the outer and inner members is in the range of 30 to 100 mm.
